# EUROPÄISCHE PATENTSCHRIFT

(11) **EP 2 201 552 B1**
(45) Veröffentlichungstag und Bekanntmachung des Hinweises auf die Patenterteilung: **02.02.2011**
(21) Anmeldenummer: 08786288.4
(22) Anmeldetag: 22.07.2008
(51) Int. Cl.: G08G 1/0968, G01C 21/34

(54) **NAVIGATIONSGERÄT FÜR KRAFTFAHRZEUGE UND VERFAHREN ZUR BERECHNUNG UND AUSGABE MINDESTENS EINER ALTERNATIVEN STRASSENROUTE IM STAUFALL**
NAVIGATION APPLIANCE FOR MOTOR VEHICLES, AND METHOD FOR CALCULATING AND OUTPUTTING AT LEAST ONE ALTERNATIVE ROAD ROUTE IN A TAILBACK SITUATION
APPAREIL DE NAVIGATION POUR VÉHICULES AUTOMOBILES, ET PROCÉDÉ DE CALCUL ET D'ÉDITION D'AU MOINS UN ITINÉRAIRE DE DÉLESTAGE EN CAS DE BOUCHON

(30) Priorität: 12.09.2007 DE 102007043533
(43) Veröffentlichungstag der Anmeldung: 30.06.2010
(73) Patentinhaber: Robert Bosch GmbH, 70442 Stuttgart (DE)
(72) Erfinder: FISCHER, Kai, 31199 Diekholzen (DE)
(86) Internationale Anmeldenummer: PCT/EP2008/059552
(87) Internationale Veröffentlichungsnummer: WO 2009/033864

(56) Entgegenhaltungen:
- EP-A- 1 533 592
- DE-A1- 10 253 135

## Beschreibung

Die vorliegende Erfindung geht aus von einem Navigationsgerät sowie von einem Verfahren zur Berechnung und Ausgabe mindestens einer alternativen Strassenroute im Staufall nach den Merkmalen der Oberbegriffe der Ansprüche 1 und 7.

Aus der DE 103 27 188 A1 ist ein Navigationsgerät für Kraftfahrzeuge sowie ein Verfahren zur Ausgabe von Verkehrslageinformationen bekannt, bei dem Warnhinweise und Verkehrslageinformationen unabhängig von einer berechneten Route (Stichwort: aktive Zielführungsfunktion), sondern abhängig von der aktuellen Ortsposition in Fahrtrichtung ermittelt werden. Wenn die Zielführung des Navigationsgeräts nicht aktiviert ist, kann der Fahrer dennoch vor dynamischen Verkehrsereignissen gewarnt werden.

Aus der DE 102 33 376 Al ist ein Fahrerassistenz- bzw. Navigationssystem bekannt, bei dem u.a. auch Informationen über Stauwarnungen ausgegeben werden sollen, wenn vom Fahrer keine Zielvorgabe eingegeben wurde.

Ferner sind in der DE 102 53 135 Al und in der EP 1 533 592 Al Navigationsgeräte zur Umfahrung von Verkehrsbehinderungen offenbart.

Um jedoch Staus umfahren zu können, müsste bei derartigen Systemen der Fahrer als nächstes ein Ziel eingeben, damit die Zielführungsfunktion aktiviert werden kann.

Aufgabe der Erfindung ist es, die zuvor beschriebenen Navigationssysteme funktional zu erweitern und die Handhabung für den Fahrer weiter zu vereinfachen.

Die Lösung der Aufgabe erfolgt durch die im Anspruch 1 und 7 angegebenen Merkmale.

Der Grundgedanke der Erfindung liegt darin, dass dem Fahrer bzw. dem Nutzer des Navigationssystems auf vorteilhafte Art und Weise auch bei deaktivierter Zielführungsfunktion für jeden Stau, der in einem definierten Positionshorizont liegt, mindestens eine alternative Strassenroute angeboten wird.

Dazu wird in einem ersten Verfahrensschritt mindestens ein hinter dem Stauabschnitt liegender Wiedereintrittspunkt für die ursprüngliche Strassenroute ermittelt. Danach wird mindestens eine alternative Strassenroute ermittelt, die nicht vom Stau betroffen ist und die zum Wiedereintrittspunkt der ursprünglichen Strassenroute führt. Als dritter Schritt erfolgt die Markierung der ermittelten alternativen Strassenroute als "Ziel" für die Umfahrung des Stauabschnitts.

Für den Fall, dass durch das Navigationssystem mehrere Wiedereintrittspunkte ermittelt worden sind, wird zusätzlich zu den drei zuvor beschriebenen Verfahrensschritten noch der Fahrzeitvorteil der ermittelten alternativen Strassenrouten berechnet und die alternative Strassenroute mit dem größten Fahrzeitvorteil als "Ziel" für die Umfahrung des Stauabschnitts ausgegeben.

In den Unteransprüchen sind weitere vorteilhafte Ausgestaltungen und Verbesserungen des erfindungsgemäßen Navigationsgeräts bzw. des erfindungsgemäßen Verfahrens zur Berechnung und Ausgabe von alternativen Strassenrouten bei Verkehrsstörungswarnungen enthalten.

Es wird vorgeschlagen, dass Verkehrsstörungen, die im Positionshorizont liegen, in der auf dem Display des Navigationsgeräts ausgegebenen Liste ganz oben stehen.

Zur Verbesserung bzw. Vereinfachung der Darstellung auf dem Bedienerdisplay ist dazu auf vorteilhafte Art und Weise ein zusätzlicher Menüpunkt, z.B. "Stauumfahrung", vorgesehen. Dabei sind die Stauabschnitte entweder nach der Entfernung -die direkt vor dem Fahrer liegenden Stauabschnitte zuerst- oder nach der Wahrscheinlichkeit des Befahrens sortiert.

Zum ausgewählten Stau werden auf vorteilhafte Weise die möglichen Wiedereintrittspunkte, vorzugsweise unter Angabe von Strassennummer, Anschlussstelle, Fahrtrichtung und Fahrzeitvorteil präsentiert.

Es ist auch denkbar, dass das Navigationssystem automatisch eine Liste der betroffenen Staus ausgibt, sobald ein Stau im Positionshorizont des Navigationssystems gemeldet wird. Der Nutzer braucht dann nicht mehr die entsprechende Stautaste drücken. Ist nur ein Stau vorhanden, so ist eine Auswahl des Staus nicht notwendig und es kann direkt zur Auswahl des Wiedereintrittspunktes gewechselt werden.

Bei Navigationsgeräten mit Kartendarstellung sind die alternativen Strassenrouten auf dem Display dargestellt und können z.B. mit Hilfe eines Dreh- und Drückgebers ausgewählt und gestartet werden.

Das Verfahren zur Ermittlung von alternativen Strassenrouten im Staufall kann auf vorteilhafte Art und Weise dadurch erweitert werden, dass sich bei Stauabschnitten, die sich über Abzweigungen bzw. Kreuzungen erstrecken, auch für die von den Abzweigungen bzw. Kreuzungen wegführenden Strassenabschnitte alternative Wiedereintrittspunkte berechnet werden.

Dem Fahrer können weiterhin ausserhalb des Stauabschnitts liegende markante Zielpunkte, wie z.B. Zentrum Stadt A, oder als im Speicher des Navigationsgeräts abgelegte Ziele angeboten werden.

Ausführungsbeispiele der Erfindung sind in der nachfolgenden Beschreibung und Zeichnung näher erläutert.

Es zeigen:
Figur 1 eine schematische Darstellung eines Navigationsgerätes für Kraftfahrzeuge mit seinen wesentlichen Komponenten,
Figur 2 eine schematische grafische Darstellung von gültigen Wiedereintrittspunkten für eine alternative Strassenroute im Staufall,
Figur 3 eine schematische grafische Darstellung für alternative Strassenrouten im Staufall,
Figur 4 eine schematische grafische Darstellung zur Ermittlung des günstigsten Wieder-Eintrittspunktes für eine Stauumfahrung,
Figur 5 eine schematische grafische Darstellung von möglichen Wiedereintrittspunkten, wenn Abweigungen auf weitere Strassen vorhanden sind,
Figur 6 eine schematische grafische Darstellung möglicher Wiedereintrittspunkte, die anhand von markanten Zielpunkten oder von im Speicher des Navigationsgeräts abgelegten Ziele gewählt sind,
Figur 7 eine Displayanzeige auf dem Bildschirm eines Navigationsgeräts im Fall von Verkehrsstörungsmeldungen und
Figur 8 eine Displayanzeige auf dem Bildschirm eines Navigationsgeräts im Fall einer ausgewählten Verkehrsstörungsmeldung.

### Beschreibung der Ausführungsbeispiele

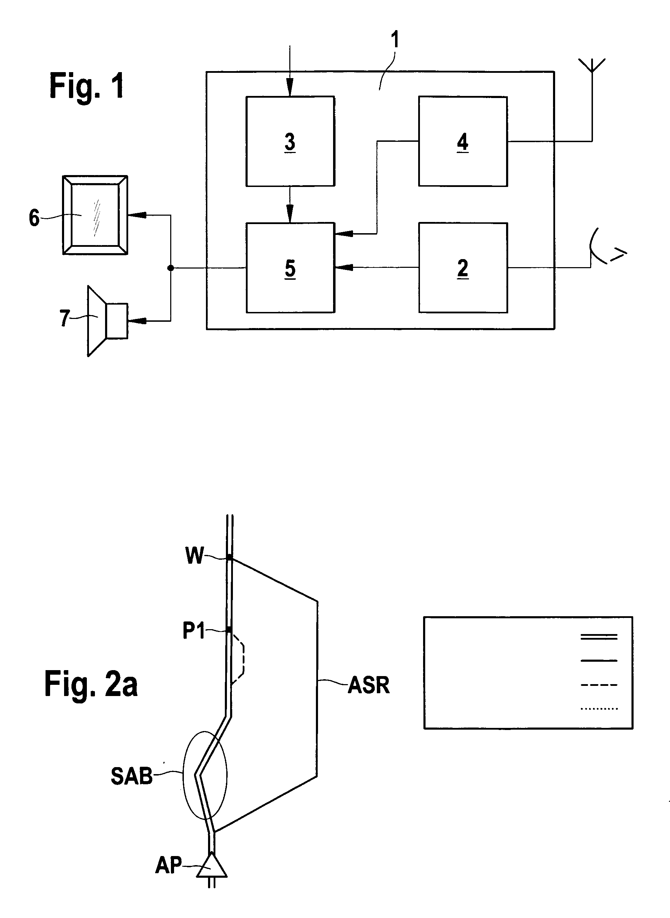

In Figur 1 ist ein Navigationsgerät 1 mit seinen wesentlichen Komponenten dargestellt. Dazu gehören eine Positionsortungseinrichtung 2, die beispielsweise mit einem Global-Positioning- System, kurz GPS, zusammenwirkt. Eine Fahrtroutenermittlungseinrichtung 3 berechnet optimale Routen von einem Startpunkt zu einem Zielpunkt auf der Grundlage von Navigationsdaten NavDat. Die Navigationsdaten können aus einer im Navigationssystem befindlichen CD-ROM ausgelesen werden; alternativ dazu können natürlich die Navigationsdaten auch über Funk durch einen externen Serviceprovider zur Verfügung gestellt werden, die dann bspw. auch die Routenberechnung übernehmen.

Die Fahrtroutenermittlungseinrichtung 3 arbeitet auf bekannte Art und Weise mit einem digitalisierten Netz in Form von Knoten und Kanten, denen sich Verkehrslageinformationen mit Hilfe einer Verkehrslagen- Auswertungseinheit 4 zuordnen lassen.

Die Verkehrslageinformationen können beispielsweise über den Traffic-Message-Channel TMC ausgewertet werden, über den Verkehrslagemeldungen von Radiosendern (Radio Data-System, kurz RDS) ausgestrahlt werden. Diese Verkehrslageinformationen werden in der Verkehrslagen- Auswertungseinheit 4 beispielsweise über Referenzlisten Strassenabschnitte und/oder Strassenknotenpunkte zugeordnet, die dann im Navigationsgerät 1 entsprechend gekennzeichnet werden.

Das Navigationsgerät 1 hat weiterhin eine Steuereinheit 5, in denen die optimierten Routen- und Verkehrslageinformationen zusammengeführt und optisch über ein Display 6 und/oder über ein Lautsprechersystem 7 ausgegeben werden.

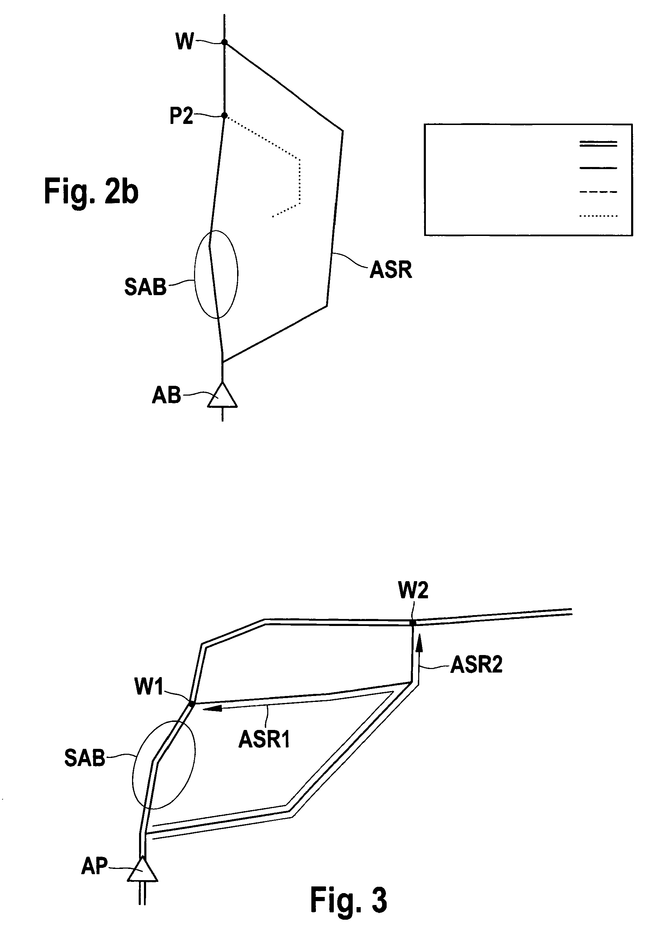

Im deaktivierten Zustand der Fahrtroutenermittlungseinrichtung 3 erfolgt durch die Verkehrslagen-Auswertungseinheit 4 und die Steuereinheit 5 eine Überprüfung der von der aktuellen Ortsposition des Kraftfahrzeuges aus in Fahrtrichtung vor dem Kraftfahrzeug liegenden Verkehrswege auf vorhandene Verkehrslageinformationen. Es erfolgt nicht nur eine Ausgabe von Warnmeldungen, sondern auch die Berechnung und Ausgabe mindestens einer alternativen Strassenroute ASR. Diese Funktion wird nachfolgend anhand der Fig. 2 bis 8 näher erläutert.

Nachdem von der Verkehrslagen- Auswertungseinheit 4 ein Stauabschnitt SAB erfasst worden ist und, um einen Wiedereintrittspunkt W zu ermitteln, bei dem der Fahrer wieder auf die ursprüngliche Strasse geführt werden kann, wird der Positionshorizont entsprechend durchsucht. Der Positionshorizont ist ein Graph, bei dem die Straßen ermittelt werden, welche man ausgehend von der aktuellen Position erreichen kann. Zusätzlich sollte der Positionshorizont für diese Funktion für jeden Straßenabschnitt im Graphen die Informationen enthalten, von welchen Strassen dieser Abschnitt noch erreicht werden kann. Wie in Fig. 2a, 2b dargestellt, werden ausgehend von dem vor der aktuellen Position AP des Fahrzeugs liegenden Stauabschnitt SAB die nachfolgenden Strassenabschnitte ermittelt. Sobald ein Strassenabschnitt gefunden wird, der nicht mehr vom Stauabschnitt SAB betroffen ist, und der zusätzlich dazu über eine andere Strasse erreicht werden kann, wird dieser für die Verwendung als "Ziel" für die Stauumfahrung entsprechend markiert.

Dabei werden potenzielle Wiedereintrittspunkte -in Fig. 2a, 2b als P1 und P2 bezeichnet- ausgeschlossen, da es sich bei P1 um einen Parkplatz (z.B. Auffahrt einer Raststelle, die auch nur von der Autobahn BAB erreicht werden kann) und bei P2 um eine Strasse mit niedriger Klasse/Priorität (z.B. Feldweg) handelt.

Es kann auch sinnvoll sein, mehrere Wiedereintrittspunkte für die Umfahrung des Stauabschnitts SAB zu ermitteln. In Fig. 3 ist die zum Wiedereintrittspunkt W2 führende alternative Strassenroute ASR2 kürzer und schneller als die zum Wiedereintrittspunkt W1 führende alternative Strassenroute ASR1. Die Bewertung erfolgt dadurch, dass zu den gefundenen Wiedereintrittspunkten alternative Strassenrouten ASR und ihre entsprechenden Fahrzeitvorteile ermittelt werden.

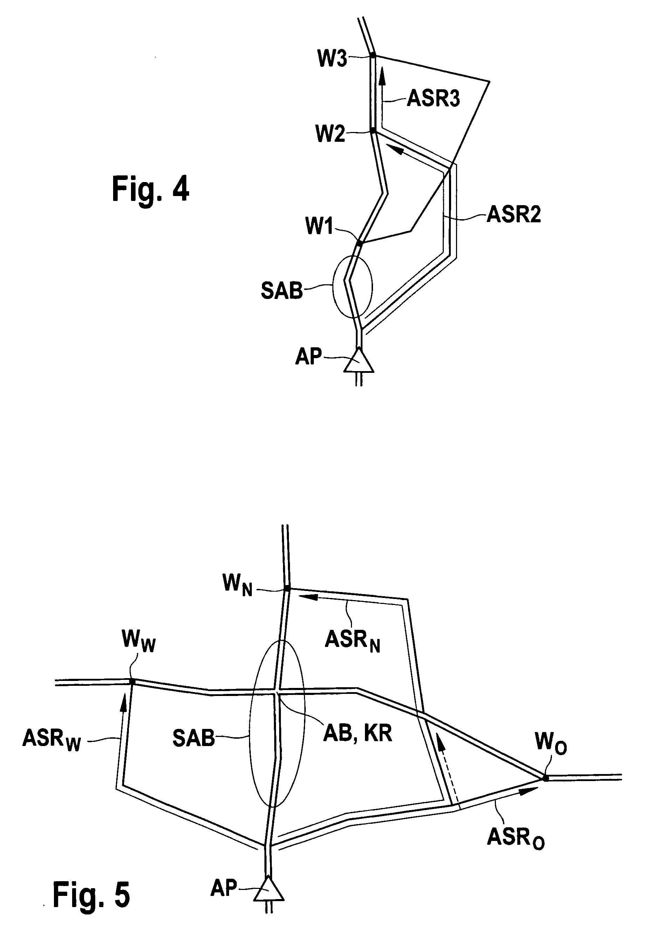

In Fig. 4 wurde eine alternative Strassenroute ASR3 für den Wiedereintrittspunkt W3 berechnet. Diese Strassenroute ASR3 führt auch über einen Wiedereintrittspunkt W2, der von der Strassenroute ASR2 verwendet wird und vor dem Wiedereintrittspunkt W3 liegt, so dass Wiedereintrittspunkt W2 als "Ziel" für die Stauumfahrung ausgegeben wird. Die Fahrzeitvorteile für die beiden Strassenrouten ASR3 und ASR2 sind gleich, da zwischen den beiden Wiedereintrittspunkten W2 und W3 die gleiche Strecke zurück zu legen ist. Wiedereintrittspunkt W1 wird nicht mehr betrachtet, da hier kein zusätzlicher Fahrzeitvorteil mehr zu erwarten ist.

Für den Fall, dass im Stauabschnitt SAB Abzweigungen AB oder Kreuzungen KR vorhanden sind, so ist -wie in Fig. 5 exemplarisch dargestellt- vorgesehen, dass auch für die von den Abzweigungen AB bzw. Kreuzungen KR wegführenden Strassen Wiedereintrittspunkte W_{W} (in Richtung Westen), W_{O} (in Richtung Osten) und W_{N} (in Richtung Norden) ermittelt werden, die über vom Ausgangspunkt AP startende alternative Strassenrouten ASR_{W}, ASR_{O} bzw. ASR_{N} zu erreichen sind.

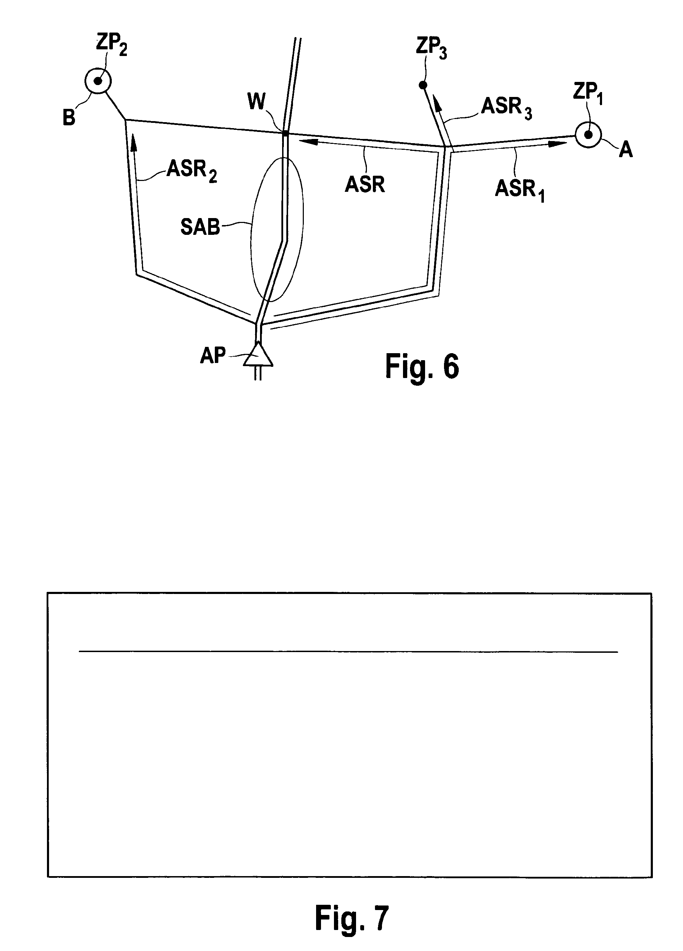

Es ist auch denkbar, dass der Fahrer die direkt hinter dem Stauabschnitt SAB liegende Abzweigung AB abfahren wollte, um z.B. die an dieser Anschlussstelle liegende Stadt zu erreichen. Die Umfahrung über die alternative Strassenroute ASR zum Wiedereintrittspunkt W ist -wie in Fig. 6 dargestelltnicht immer sinnvoll, wenn man z.B. zum Zielpunkt ZP₁ (z.B. Stadt A) fahren möchte.

Um dem Fahrer trotzdem sinnvolle "Ziele" für die Stauumfahrung anbieten zu können, ist vorgesehen, dass ausserhalb des Stauabschnitts SAB liegende besondere Zielpunkte ZP₁ und ZP₂ (Stadt A, B) oder in der Nähe vom Wiedereintrittspunkt W im Speicher ablegte Zielpunkte ZP₃ ermittelt und angezeigt werden, zu denen dann entsprechende alternative Strassenrouten ASR₁, ASR₂ und ASR₃ berechnet werden. Es ist auch denkbar, dass dem Fahrer weiter entfernt liegende Zielspeichereinträge vorgeschlagen werden, wenn diese in der Vergangenheit häufig verwendet wurden oder dass der Fahrer bestimmte Ziele festlegen kann (z.B. "zu Hause"), welche bei einer Stauumfahrung immer angeboten werden sollten.

In Fig. 7 sind im Positionshorizont liegende Verkehrsstörungen auf dem Display des Navigationsgeräts dargestellt, die bei nicht aktiver Zielführung in einem zusätzlichen Menüpunkt -z.B. "Stauumfahrung" aufgeführt sind. Die Verkehrsstörungen sind dabei entweder nach Entfernung oder nach der Wahrscheinlichkeit des Befahrens sortiert.

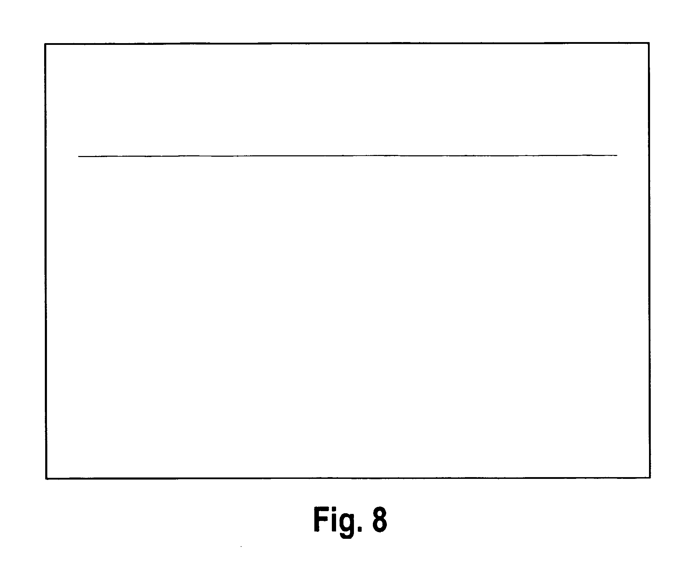

In Fig. 8 sind dann die möglichen Wiedereintrittspunkte unter Angabe der Strassennummer, der Anschlussstelle, der Fahrtrichtung und des Fahrzeitvorteils auf dem Display dargestellt. Im vorliegenden Ausführungsbeispiel sind die Wiedereintrittspunkte aufgelistet, die nach Auswahl von Position 1 der in Fig. 7 dargestellten Stauliste berechnet worden sind.

Es ist auch denkbar, dass das Navigationsgerät 1 automatisch eine Liste der Staumeldungen aufschaltet, sobald ein Stau im Positionshorizont des Navigationssystems gemeldet wird. Der Nutzer muss dann nicht mehr die entsprechende Stau- Taste drücken.

Bei Navigationsgeräten mit Kartendarstellung können die ermittelten alternativen Strassenrouten ASR (und die betroffenen Staus) auch grafisch dargestellt werden. Der Nutzer kann dann z.B. über einen Dreh- Drückgeber eine alternative Strassenroute auswählen (diese wird dann farblich hervorgehoben) und durch Drücken die Zielführung starten.

Da der Positionshorizont mit jeder neuen Fahrzeugposition weiter ausgebaut werden kann, ist es auch denkbar, dass mit jedem update überprüft wird, ob eine neuer Wiedereintrittspunkt im Horizont auffindbar ist. Hat der Fahrer noch keine Stauumfahrung aktiviert, kann überprüft werden, ob sich ein grösserer Fahrzeitvorteil bei Verwendung dieses Punktes ergibt. Falls der Fahrer bereits eine Stauumfahrung aktiviert hat, kann im Hintergrund der Fahrzeitvorteil für den neuen Wiedereintrittspunkt ermittelt werden. Erhöht sich der Fahrzeitvorteil, kann dem Nutzer das neue "Ziel" für die Stauumfahrung vorgeschlagen werden.

## Patentansprüche

1. Navigationsgerät (1) für Kraftfahrzeuge mit einer Positionsortungseinrichtung (2) zur Bestimmung der aktuellen Ortsposition des Kraftfahrzeuges und mit einer zentralen oder dezentralen Verkehrslagen-Auswertungseinheit (4) zum Empfangen und Auswerten von Verkehrslageinformationen sowie mit einer Fahrtroutenermittlungsseinrichtung (3) mit dynamischer Zielführung, die eine automatische Berechnung mindestens einer alternativen Strassenroute (ASR) im Staufall beinhaltet, wobei bei deaktivierter Zielführungsfunktion im Fall von Verkehrsstörungswarnungen die Berechnung und Ausgabe mindestens einer alternativen Strassenroute (ASR) erfolgt, **dadurch gekennzeichnet, dass** die Fahrtroutenermittlungsseinrichtung (3) eine alternative Strassenroute (ASR) in Abhängigkeit von Zielspeichereinträgen (ZP₁, ZP₂, ZP₃) vorschlägt, wobei die Zielspeichereinträge wenigstens eine der folgenden Eigenschaften umfassen: der Zielpunkt ist ein
- außerhalb des stauabschnitts (SAB) und eines möglichen Wiedereintrittspunkts (W) liepender markanter Punkt (ZP2), wie Stadt oder Stadtzentrum,
- in der Nähe eines möglichen Wiedereintrittpunkts (w) liegender Zielpunkt (ZP3), der nicht leich dem Wiedereintrittspunkt (w) ist,
- vom Fahrer festlegbarer Zielpunkt, so dass dieser bei Stauumfahrungen immer angeboten wird, und/oder
- in der Vergangenheit häufig verwendeter Zielpunkt aus einem Zielspeicher

2. Navigationsgerät (1) nach Anspruch 1, **dadurch gekennzeichnet, dass** die Verkehrsstörungen im Positionshorizont, der ein Graph ist, bei dem Straßen ermittelt werden, welche man ausgehend von der aktuellen Position erreichen kann, in der auf einem Display (6) des Navigationsgeräts (1) ausgegebenen Liste ganz oben stehen.

3. Navigationsgerät (1) nach Anspruch 2, **dadurch gekennzeichnet, dass** ein zusätzlicher Menüpunkt, z.B. "Stauumfahrung" vorgesehen ist, in dem die im Positionshorizont liegenden Stauabschnitte (SAB) dargestellt sind.

4. Navigationsgerät (1) nach Anspruch 3, **dadurch gekennzeichnet, dass** die Stauabschnitte (SAB) entweder nach der Entfernung, wobei die direkt vor einem liegenden Stauabschnitte (SAB) zuerst angezeigt werden oder nach der Wahrscheinlichkeit des Befahrens sortiert sind.

5. Navigationsgerät (1) nach einem der Ansprüche 2 bis 4, **dadurch gekennzeichnet, dass** auf dem Display (6) des Navigationsgeräts (1) zum ausgewählten Stau die möglichen Wiedereintrittspunkte vorzugsweise unter Angabe von Strassennummer, Anschlussstelle, Fahrtrichtung und Fahrzeitvorteil dargestellt sind.

6. Navigationsgerät (1) nach Anspruch 5, **dadurch gekennzeichnet, dass** die alternativen Strassenrouten (ASR) auf dem Display (6) des Navigationsgeräts (1) dargestellt und vorzugsweise über ein Dreh-Drückgeber auswählbar und startbar sind.

7. Verfahren zur Berechnung und Ausgabe einer alternativen Strassenroute (ASR) bei Verkehrsstörungswarnungen mit einem Navigationsgerät (1) gemäß den Merkmalen eines der vorhergehenden Ansprüche, **gekennzeichnet durch** folgenden Prüfalgorithmus:
- Ermittlung eines Wiedereintrittspunkts (W) hinter dem Stauabschnitt (SAB),
- Ermittlung von alternativen Strassenrouten (ASR), die nicht vom Stau betroffen sind und die zum Wiedereintrittspunkt (W) führen, in Abhängigkeit von zielspeicheveinträgen (ZP1, ZP2, ZP3), die mondestens eine der Folgenden Egenscaften unfassen; den Zelprenht ist ein auβerhalb des stanabsduitts (SAB) und eines moylochen Wiedereintrittstpunkts (W) ligender markanter puulct (ZP2), wie stadt oder Stadtzeutrume, - in der Nähe eines möglichen Weideveintrittspunhts (W) Liegenden Zielpunkt (ZP3), der nicht gleich dem Wie der eintrittpunht (W) ist, - von Fahrer feslegharer Zielpunkt, so dass diesen bei Stauumferhnengen immer angeboten wird, and/oder - in der Vergangenheit hänfig verwendeter Zielpunht aus einem Zielspeicher. -, und
- Markierung mindestens einer ermittelten alternativen Strassenroute (ASR) als "Ziel" für die Umfahrung des Stauabschnitts (SAB).
-
- (
-
-

8. Verfahren nach Anspruch 7, **gekennzeichnet durch** die folgenden Schritte:
- eine Berechnung des Fahrzeitvorteils der ermittelten alternativen Strassenrouten (ASR) und
- Markierung dejenigen alternativen Strassenroute (ASR) mit dem größten Fahrzeitvorteil als "Ziel" für die Umfahrung des Stauabschnitts (SAB).

9. Verfahren nach Anspruch 7 oder 8, **dadurch gekennzeichnet, dass** sich bei Stauabschnitten (SAB), die sich über Abzweigungen (AB) bzw. Kreuzungen (KR) erstrecken, auch für die von den Abzweigungen (AB) bzw. Kreuzungen (KR) wegführenden Strassenabschnitten alternative Wiedereintrittspunkte ermittelt werden.

## Claims

1. Navigation appliance (1) for motor vehicles having a position-finding device (2) for determining the current local position of the motor vehicle and having a central or distributed traffic situation evaluation unit (4) for receiving and evaluating traffic situation information and also having a journey route ascertainment device (3) with dynamic routing which involves automatic calculation of at least one alternative road route (ASR) in the event of a queue, wherein when the routing function is deactivated, at least one alternative road route (ASR) is calculated and output in the event of traffic disruption warnings, **characterized in that** the journey route ascertainment device (3) proposes an alternative road route (ASR) on the basis of destination memory entries (ZP₁, ZP₂, ZP₃), wherein the destination memory entries comprise at least one of the following properties:
the destination is a
- point of interest (ZP2), such as a town or town centre, which is situated outside the queue section (SAB) and a possible re-entry point (W),
- destination (ZP3) which is situated in proximity to a possible re-entry point (W) and which is not the same as the re-entry point (W),
- destination which can be stipulated by the driver, so that said destination is always offered when circumnavigating queues, and/or
- destination frequently used in the past from a destination memory.

2. Navigation appliance (1) according to Claim 1, **characterized in that** the traffic disruptions on the position horizon, which is a graph in which roads are ascertained which can be reached from the current position, are at the very top in the list which is output on a display (6) of the navigation appliance (1).

3. Navigation appliance (1) according to Claim 2, **characterized in that** an additional menu item, e.g. "Queue circumnavigation", is provided which presents the queue sections (SAB) which are situated on the position horizon.

4. Navigation appliance (1) according to Claim 3, **characterized in that** the queue sections (SAB) are sorted either on the basis of distance, with the queue sections (SAB) situated directly ahead being displayed first, or on the basis of probability of use.

5. Navigation appliance (1) according to one of Claims 2 to 4, **characterized in that** the display (6) of the navigation appliance (1) presents the possible re-entry points for the selected queue, preferably with an indication of road number, junction, direction of travel and travelling time advantage.

6. Navigation appliance (1) according to Claim 5, **characterized in that** the alternative road routes (ASR) are presented on the display (6) of the navigation appliance (1) and can preferably be selected and started using a rotary/push transmitter.

7. Method for calculating and outputting an alternative road route (ASR) in the event of traffic disruption warnings using a navigation appliance (1) according to the features of one of the preceding claims, **characterized by** the following checking algorithm:
- a re-entry point (W) after the queue section (SAB) is ascertained,
- alternative road routes (ASR) which are not affected by the queue and which lead to the re-entry point (W) are ascertained on the basis of destination memory entries (ZP₁, ZP₂, ZP₃) which comprise at least one of the following properties:
the destination is a
- point of interest (ZP2), such as a town or town centre, which is situated outside the queue section (SAB) and a possible re-entry point (W),
- destination (ZP3) which is situated in proximity to a possible re-entry point (W) and which is not the same as the re-entry point (W),
- destination which can be stipulated by the driver, so that said destination is always offered when circumnavigating queues, and/or
- destination frequently used in the past from a destination memory, and
- at least one ascertained alternative road route (ASR) is marked as the "destination" for the circumnavigation of the queue section (SAB).

8. Method according to Claim 7, **characterized by** the following steps:
- the travelling time advantage of the ascertained alternative road routes (ASR) is calculated and
- that alternative road route (ASR) which has the greatest travelling time advantage is marked as the "destination" for the circumnavigation of the queue section (SAB).

9. Method according to Claim 7 or 8, **characterized in that** in the event of queue sections (SAB) which extend via branch-off points (AB) or junctions (KR), alternative re-entry points are also ascertained for the road sections which lead away from the branch-off points (AB) or junctions (KR).

## Revendications

1. Appareil de navigation (1) pour véhicules automobiles comprenant un dispositif de localisation de la position (2) pour déterminer la position locale actuelle du véhicule automobile et comprenant une unité d'interprétation (4) centrale ou décentralisée de la situation du trafic pour recevoir et interpréter des informations de situation du trafic et comprenant aussi un dispositif de détermination de l'itinéraire à parcourir (3) avec guidage dynamique à la destination, lequel contient un calcul automatique d'au moins un itinéraire routier alternatif (ASR) en cas d'embouteillage, le calcul et la diffusion d'au moins un itinéraire routier alternatif (ASR) ayant lieu en cas d'avertissements de perturbations du trafic lorsque la fonction de guidage à la destination est désactivée, **caractérisé en ce que** le dispositif de détermination de l'itinéraire à parcourir (3) propose un itinéraire routier alternatif (ASR) en fonction d'entrées de mémoire de destination (ZP₁, ZP₂, ZP₃), les entrées de mémoire de destination comprenant au moins l'une des propriétés suivantes :
le point de destination est un
- point remarquable (ZP₂) qui se trouve en-dehors de la section d'embouteillage (SAB) et d'un point de réentrée possible (W), par exemple une ville ou un centre-ville,
- point de destination (ZP₃) qui se trouve à proximité d'un point de réentrée possible (W) qui est différent du point de réentrée (W),
- point de destination pouvant être défini par le conducteur de sorte que celui-ci soit toujours proposé dans le cas de contournements d'embouteillages, et/ou
- point de destination fréquemment utilisé dans le passé issu d'une mémoire de destination.

2. Appareil de navigation (1) selon la revendication 1, **caractérisé en ce que** les perturbations du trafic sont déterminées à l'horizon de la position, lequel est un graphe, pour les routes qui sont accessibles à partir de la position actuelle et qui se trouvent tout en haut de la liste affichée sur un écran (6) de l'appareil de navigation (1).

3. Appareil de navigation (1) selon la revendication 2, **caractérisé en ce qu'**il est prévu une commande de menu supplémentaire, par exemple « contournement d'embouteillage », dans laquelle sont représentées les sections d'embouteillage (SAB) qui se trouvent dans l'horizon de position.

4. Appareil de navigation (1) selon la revendication 3, **caractérisé en ce que** les sections d'embouteillage (SAB) sont soit affichées d'après la distance, les sections d'embouteillage (SAB) qui se trouvent directement à l'avant étant affichées en premier, soit triées d'après la probabilité de passage du véhicule.

5. Appareil de navigation (1) selon l'une des revendications 2 à 4, **caractérisé en ce que** les points de réentrée possibles sont représentés sur l'écran (6) de l'appareil de navigation (1) à propos de l'embouteillage sélectionné, de préférence en indiquant le numéro de route, le point de raccordement, le sens de circulation et l'avantage de temps de circulation.

6. Appareil de navigation (1) selon la revendication 5, **caractérisé en ce que** les itinéraires routiers alternatifs (ASR) sont représentés sur l'écran (6) de l'appareil de navigation (1) et peuvent être sélectionnés et démarrés de préférence par le biais d'un codeur de rotation/pression.

7. Procédé de calcul et de diffusion d'un itinéraire routier alternatif (ASR) en présence d'avertissements de perturbations du trafic avec un appareil de navigation (1) selon les caractéristiques de l'une des revendications précédentes, **caractérisé par** l'algorithme de contrôle suivant :
- Détermination d'un point de réentrée (W) derrière la section d'embouteillage (SAB),
- Détermination d'itinéraires routiers alternatifs (ASR) qui ne sont pas concernés par l'embouteillage et qui mènent au point de réentrée (W) en fonction d'entrées de mémoire de destination (ZP₁, ZP₂, ZP₃), lesquelles comprennent au moins l'une des propriétés suivantes :
le point de destination est un
- point remarquable (ZP₂) qui se trouve en-dehors de la section d'embouteillage (SAB) et d'un point de réentrée possible (W), par exemple une ville ou un centre-ville,
- point de destination (ZP₃) qui se trouve à proximité d'un point de réentrée possible (W) qui est différent du point de réentrée (W),
- point de destination pouvant être défini par le conducteur de sorte que celui-ci soit toujours proposé dans le cas des contournements d'embouteillages, et/ou
- point de destination fréquemment utilisé dans le passé issu d'une mémoire de destination, et
- Marquage d'au moins un itinéraire routier alternatif (ASR) déterminé en tant que « destination » pour le contournement de la section d'embouteillage (SAB).

8. Procédé selon la revendication 7, **caractérisé par** les étapes suivantes :
- Calcul de l'avantage de temps de circulation des itinéraires routiers alternatifs (ASR) déterminés et
- Marquage de l'itinéraire routier alternatif (ASR) ayant le plus grand avantage de temps de circulation en tant que « destination » pour le contournement de la section d'embouteillage (SAB).

9. Procédé selon la revendication 7 ou 8, **caractérisé en ce que** dans le cas des sections d'embouteillage (SAB) qui s'étendent sur des bifurcations (AB) ou des intersections (KR), des points de réentrée alternatifs sont également déterminés pour les sections de route qui partent des bifurcations (AB) ou des intersections (KR).
